# EUROPÄISCHE PATENTSCHRIFT

(11) **EP 4 242 594 B1**
(45) Veröffentlichungstag und Bekanntmachung des Hinweises auf die Patenterteilung: **24.09.2025**
(21) Anmeldenummer: 23159770.9
(22) Anmeldetag: 02.03.2023
(51) Int. Cl.: G01D 5/244

(54) **DREHGEBER**
ROTARY ENCODER
CAPTEUR DE ROTATION

(30) Priorität: 09.03.2022 DE 102022000816
(43) Veröffentlichungstag der Anmeldung: 13.09.2023
(73) Patentinhaber: Baumer Germany GmbH & Co. KG, 78333 Stockach (DE)
(72) Erfinder: Rapp, Günter, 78647 Trossingen (DE); Schacherer, Manfred, 78178 Geisingen (DE)
(74) Vertreter: Strauss, Steffen

(56) Entgegenhaltungen:
- EP-A1- 1 617 180
- EP-B1- 1 462 771
- WO-A1-2011/042190
- DE-A1- 102014 102 564
- DE-A1- 102014 220 214
- DE-A1- 102017 001 386
- DE-A1- 19 849 108

## Beschreibung

Die vorliegende Erfindung betrifft einen Drehgeber gemäß dem Oberbegriff des Patentanspruches 1 und ein Verfahren zur Herstellung eines Drehgebers gemäß dem Oberbegriff des Anspruches 9.

Drehgeber dienen dazu, in technischen Systemen, beispielsweise für eine Welle einer Maschine deren Position zu erfassen. Der Drehgeber umfasst eine Eingangswelle und mit dem Drehgeber wird die Drehposition oder der Drehwinkel der Eingangswelle erfasst. Die Eingangswelle des Drehgebers ist drehfest mit der Antriebswelle der Maschine verbunden, sodass dadurch mittels der Erfassung der Position der Eingangswelle des Drehgebers der Drehwinkel bzw. die Drehposition der Antriebswelle der Maschine erfasst werden kann. An der Eingangswelle des Drehgebers ist eine Rotationseinheit als eine Rotationsscheibe drehfest fixiert. Die Rotationsscheibe ist mit Codierungen versehen und die Positionen der Codierungen werden von einer Erfassungseinheit erfasst. Aus Codierungssignalen von der Erfassungseinheit bestimmt eine Recheneinheit als ein Mikrocontroller die Drehposition der Eingangswelle und damit auch die Drehposition der Welle der Maschine.

Die Energieversorgung des Drehgebers mit elektrischem Strom wird von einer Energieschnittstelle zur Verfügung gestellt. An die Energieschnittstelle wird eine elektrische Versorgungsspannung angelegt.

Es sind auch Drehgeber als Absolutdrehgeber bekannt, bei denen die Drehposition der Eingangswelle auch ohne eine Versorgungsspannung an der Energieschnittstelle erfasst werden kann. Hierzu ist der Drehgeber als der Absolutdrehgeber mit einer Batterie ausgebildet, sodass auch bei abgeschalteter Versorgungsspannung an der Energieschnittstelle mittels elektrischer Energie aus der Batterie der Drehgeber betrieben werden kann.

Für den Betrieb des Drehgebers ohne externe Versorgungsspannung liegt der ungefähr notwendige elektrische Strom für den Mikrocontroller, in einem sogenannten Aktivmodus, bei 10 µA. Sowohl nach der Herstellung des Drehgebers als auch bei einer Lagerung des Drehgebers befindet sich der Drehgeber in dem Aktivmodus. In dem Aktivmodus benötigt der Drehgeber somit ständig Strom von wenigstens 10 µA.

Da jedoch bei der Lagerung des Drehgebers keine Versorgungsspannung an der Energieschnittstelle vorhanden ist, erfolgt eine relativ schnelle Entladung der Batterie. Bei einer längeren Lagerung des Drehgebers in dem Aktivmodus, beispielsweise bei einem Zeitraum von 2 bis 4 Jahren, wird die Batterie somit zu einem erheblichen Anteil entladen. In nachteiliger Weise steht somit nach der Lagerung und mit der Inbetriebnahme des Drehgebers nur noch ein sehr kleiner Ladezustand der Batterie zur Verfügung. Bei einer abgeschalteten Versorgungsspannung an der Energieschnittstelle kann somit der Drehgeber nur noch über eine sehr kurze Zeit zur Erfassung der Drehposition der Eingangswelle eingesetzt werden. Der Drehgeber ist dadurch in nachteiliger Weise nur noch für eine kurze Zeit geeignet, um auch ohne Versorgungsspannung an der Energieschnittstelle die Anzahl der Umdrehungen der Eingangswelle zu erfassen.

Die EP 2 562 512 A1 zeigt einen Drehgeber mit einer drehfest an einer Eingangswelle gelagerten Maßverkörperung, mit einer der Maßverkörperung zugeordneten Abtasteinrichtung zur kontinuierlichen Erfassung einer Winkelstellung der Eingangswelle, sowie mit einer Auswertungseinheit, die mit der Abtasteinrichtung verbunden ist, um die Winkelstellung der Eingangswelle kontinuierlich bestimmen zu können.

Die WO 2011/042 190 A1 offenbart einen Drehgeber mit einem Energiesparmodus, der im Falle eines Netzspannungsausfalls aktivierbar ist und eine Energiequelle in Form einer Batterie umfasst, um Verbraucher zumindest zweitweise mit elektrischer Energie zu versorgen.

Die EP 1 617 180 A1 offenbart einen Drehgeber zum Erfassen einer Position einer Eingangswelle mit einer drehfest an der Eingangswelle gelagerten Codierung, die durch Magnete eines Magnetträgers ausgebildet sind. Die zum Erfassen der Position der Eingangswelle offenbarte Erfassungseinheit wird durch einen oder zwei AMR-Sensoren sowie durch zwei Reed-Schaltkontakte ausgebildet. Ferner ist ein Sleep-Modus offenbart, um nach der Inbetriebnahme des Drehgebers eine Drehbewegung der Eingangswelle bei reduziertem Energieverbrauch zu überwachen.

Ferner ist aus dem Stand der Technik noch die DE 198 49 108 A1, die DE 10 2014 220 214 A1, die EP 1 462 771 B1, die DE 10 2014 102 564 A1 sowie die DE 10 2017 001386 A1 bekannt.

Die Aufgabe der vorliegenden Erfindung besteht darin, einen Drehgeber und ein Verfahren zur Herstellung eines Drehgebers zur Verfügung zu stellen, bei dem auch nach einer längeren Lagerungszeit des Drehgebers eine zuverlässige und längere Erfassung der Position der Antriebswelle bei ausgeschalteter externer Versorgungsspannung gewährleistet ist.

Diese Aufgabe wird gelöst mit einem Drehgeber zur Erfassung einer Position einer Eingangswelle, umfassend eine mit der Eingangswelle drehfest verbundene Rotationseinheit mit Codierungen sowie eine Erfassungseinheit. Mit der Erfassungseinheit sind die Positionen der Codierungen auf der Rotationseinheit erfassbar und als Codierungssignale ausgebbar. Ferner ist eine Recheneinheit vorgesehen, die aus den Codierungssignalen die Position der Eingangswelle bestimmt, sowie eine Energieschnittstelle zur Versorgung des Drehgebers mit einer externen Spannungsquelle.

Zudem ist eine Datenschnittstelle zur Übertragung der erfassten Position der Eingangswelle an die Umgebung des Drehgebers vorgesehen, so dass die erfasste Position an die Umgebung übertragbar ist. Mit einer Batterie ist der Drehgeber ohne elektrische Energie aus der externen Spannungsquelle betreibbar, so dass eine Erfassung der Position der Antriebswelle ohne elektrische Energie aus der externen Spannungsquelle und mit elektrischer Energie aus der externen Spannungsquelle ausführbar ist.

Der Drehgeber umfasst einen elektrischen Schalter, der in einem Lagermodus des Drehgebers geöffnet ist und die elektrische Versorgung der Erfassungseinheit mit elektrischer Energie aus der Batterie unterbrochen ist, so dass während des Lagermodus die elektrische Leistung für den Lagermodus des Drehgebers der Batterie kleiner ist als das Entladen während des Aktivmodus des Drehgebers.

Vorzugsweise ist die notwendige elektrische Leistung zum Betrieb des Drehgebers während des Lagermodus kleiner als 50 %, 10 %, 5 %, 2 %, 1% oder 0,5 % der notwendigen elektrischen Leistung zum Betrieb des Drehgebers während des Aktivmodus.

Eine Stromentnahme aus der Batterie ist für den Drehgeber somit während des Lagermodus und damit während der Lagerung wesentlich kleiner als während des Aktivmodus. Dadurch kann der Drehgeber in vorteilhafter Weise auch über einen längeren Zeitraum bei einer nur im Wesentlichen vernachlässigbaren Entladung der Batterie in dem Lagermodus gelagert werden. Nach der Inbetriebnahme des Drehgebers und der Beaufschlagung der Energieschnittstelle mit der externen Spannungsquelle als Versorgungsspannung kann somit auch über einen längeren Zeitraum ohne die Versorgungsspannung die Drehposition einer Antriebswelle mittels elektrischer Energie aus der Batterie erfasst werden.

In einer zusätzlichen Variante ist die Recheneinheit in einem Aktivmodus und in einem Stand-by-Modus betreibbar. Die elektrische Leistung für den Betrieb der Recheneinheit ist in dem Stand-by-Modus kleiner als in dem Aktivmodus.

Im Aktivmodus benötigt die Recheneinheit beispielsweise einen elektrischen Strom von 10 µA und im Lager-Modus einen elektrischen Strom von 0,1 µA. Vorzugsweise ist die notwendige elektrische Leistung zum Betrieb der Recheneinheit während des Lager-Modus kleiner als 50 %, 10 %, 5 %, 2 %, 1 % oder 0,5 % der notwendigen elektrischen Leistung zum Betrieb der Recheneinheit während des Aktivmodus.

In einer weiteren Ausführungsform umfasst der Drehgeber eine Schalterschnittstelle zur Übertragung eines Steuersignales für den elektrischen Schalter.

Vorzugsweise ist die Schalterschnittstelle und/oder Drehwinkelschnittstelle und/oder Energieschnittstelle als eine serielle Schnittstelle ausgebildet.

Die Schalterschnittstelle und/oder Drehwinkelschnittstelle und/oder Energieschnittstelle kann aber auch als eine Bus-Schnittstelle und/oder als eine Schnittstelle mit wenigstens zwei elektrischen Kontaktelementen und/oder als eine Schnittstelle mit einem Sender und/oder einem Empfänger für eine Funkverbindung ausgebildet sein.

In einer weiteren Ausgestaltung fungiert die Drehwinkelschnittstelle und/oder die Energieschnittstelle zusätzlich als Schalterschnittstelle für den elektrischen Schalter.

In einer ergänzenden Variante ist das Öffnen und/oder Schließen des elektrischen Schalters mittels eines Steuersignales, das von der Schalterschnittstelle an die Recheneinheit übertragbar ist, ausführbar.

Erfindungsgemäß ist der Drehgeber dahingehend ausgebildet, dass während des Lagermodus des Drehgebers mit dem geöffneten elektrischen Schalter bei einem Anlegen einer elektrischen Versorgungsspannung an die Energieschnittstelle automatisch der elektrische Schalter schließbar ist und somit der Drehgeber von dem Lagermodus in den Aktivmodus umschaltbar ist, so dass die Energieschnittstelle zusätzlich als Schalterschnittstelle und die elektrische Versorgungsspannung zusätzlich als Steuersignal fungiert.

In einer weiteren Ausführungsform umfasst der Drehgeber einen Spannungssensor. Mit dem Spannungssensor ist die Spannung an der Energieschnittstelle erfassbar. Mittels der Daten aus dem Spannungssensor bei einer elektrischen Versorgungsspannung an der Energieschnittstelle ist von der Recheneinheit automatisch der elektrische Schalter schließbar. Der Drehgeber wechselt dann von dem Lagermodus in den Aktivmodus. Der Spannungssensor ist beispielsweise in die Recheneinheit eingebaut oder integriert, sodass lediglich mittels entsprechender Stromleitungen von der Energieschnittstelle zu dem Spannungssensor in der Recheneinheit stets die anliegende elektrische Spannung an der Energieschnittstelle erfassbar ist.

Vorzugsweise ist das Öffnen und/oder Schließen des elektrischen Schalters mittels des Steuersignales im Wesentlichen simultan während der Beaufschlagung der Schalterschnittstelle mit dem Steuersignal zum Öffnen und/oder Schließen des elektrischen Schalters ausführbar. Alternativ oder gleichzeitig ist mit dem Steuersignal zum Öffnen und/oder Schließen des elektrischen Schalters in der Recheneinheit die Beaufschlagung der Schalterschnittstelle mit dem Steuersignal speicherbar.

Ferner wird die Aufgabe gelöst durch ein erfindungsgemäßes Verfahren zur Herstellung eines Drehgebers zur Erfassung einer Position einer Eingangswelle, mit den Schritten:
zur Verfügung stellen eines Drehgebers, umfassend:
   - eine mit der Eingangswelle drehfest verbundene Rotationseinheit mit Codierungen,
   - eine Erfassungseinheit, mit der die Positionen der Codierungen auf der Rotationseinheit erfassbar und als Codierungssignale ausgebbar sind,
   - eine Recheneinheit, mit der aus den Codierungssignalen die Position der Eingangswelle bestimmbar ist,
   - eine Energieschnittstelle zur Versorgung des Drehgebers mit einer externen Spannungsquelle,
   - eine Drehwinkelschnittstelle zur Übertragung der erfassten Position der Eingangswelle an die Umgebung des Drehgebers, so dass die erfasste Position an die Umgebung übertragbar ist,
   - eine Batterie mittels der der Drehgeber ohne elektrische Energie aus der externen Spannungsquelle betreibbar ist, so dass eine Erfassung der Position der Antriebswelle ohne elektrische Energie aus der externen Spannungsquelle und mit elektrischer Energie aus der externen Spannungsquelle in einem Aktivmodus des Drehgebers ausführbar ist, wobei der Drehgeber mit einem elektrischen Schalter und einer Schalterschnittstelle zur Verfügung gestellt wird und
   - während der Beaufschlagung der Energieschnittstelle des Drehgebers mit einer Versorgungsspannung auf die Schalterschnittstelle ein Steuersignal zum Öffnen des elektrischen Schalters und zur Aktivierung eines Lagermodus des Drehgebers aufgebracht wird,
   - das Steuersignal in der Recheneinheit gespeichert wird und
aufgrund des Steuersignales als erster Bedingung und
während oder nach dem Abschalten der Versorgungsspannung an der Energieschnittstelle von der Recheneinheit der elektrische Schalter geöffnet wird als zweiter Bedingung,
so dass mittels des geöffneten elektrischen Schalters in dem Lagermodus des Drehgebers die elektrische Versorgung der Erfassungseinheit mit elektrischer Energie aus der Batterie unterbrochen wird und vorzugsweise die Recheneinheit von einem Aktivmodus in einen Lagermodus umgeschaltet wird, so dass während des Lagermodus die elektrische Versorgung für den Lagermodus des Drehgebers als das Entladen der Batterie kleiner ist als während des Aktivmodus des Drehgebers.

Insbesondere wird der Drehgeber in dem Lagermodus verpackt und/oder ausgeliefert.

In einer zusätzlichen Ausführungsform ist bei einer Versorgungsspannung aus dem Netz an der Energieschnittstelle der Drehgeber stets in einem Betriebsmodus.

In einer zusätzlichen Ausführungsform ist der elektrische Schalter ein Halbleiterschalter.

Vorzugsweise ist der elektrische Schalter in die Recheneinheit eingebaut und/oder integriert.

In einer weiteren Variante ist bei dem Aktivmodus des Drehgebers mit dem geschlossenen elektrischen Schalter und während und/oder nach der Beaufschlagung der Schalterschnittstelle mit einem Steuersignal zur Aktivierung des Lagermodus als erster Bedingung zur Aktivierung des Lagermodus und der Speicherung des Steuersignal zur Aktivierung des Lagermodus in der Recheneinheit mittels eines Abschaltens der elektrischen Versorgungsspannung an der Energieschnittstelle als zweiter Bedingung zur Aktivierung des Lagermodus automatisch der elektrische Schalter öffenbar und damit der Lagermodus aktiv, so dass das Öffnen des elektrischen Schalters mittels des Steuersignales nach der Beaufschlagung der Schalterschnittstelle mit dem Steuersignal zur Aktivierung des Lagermodus ausführbar ist, indem in der Recheneinheit die Beaufschlagung der Schalterschnittstelle mit dem Steuersignal speicherbar ist.

Für die Aktivierung des Lagermodus sind somit zwei Bedingungen notwendig.

In einer ersten notwendigen Bedingung wird mit einem Steuersignal zur Aktivierung des Lagermodus die Recheneinheit von der Notwendigkeit des Umschaltens von dem Aktivmodus in den Lagermodus, in Kenntnis gesetzt, d.h. dieses Steuersignal wird in der Recheneinheit gespeichert. Dieses Steuersignal bewirkt jedoch nur, dass die zweite notwendige Bedingung, nämlich das Abschalten der Versorgungsspannung an der Energieschnittstelle, das Umschalten von dem Aktivmodus in den Lagermodus bewirkt. Wird somit nach dem Steuersignal als der ersten Bedingung die Versorgungsspannung an der Energieschnittstelle abgeschaltet, so bewirkt dies stets das Umschalten des Drehgebers von dem Aktivmodus in den Lagermodus.

Erfindungsgemäß ist die Änderung des Modus als Arbeitsweise des Drehgebers von dem Lagermodus in den Aktivmodus, vorzugsweise ausschließlich, mittels des Anlegens der elektrischen Versorgungsspannung an die Energieschnittstelle automatisch der elektrische Schalter schließbar und vorzugsweise die Recheneinheit von dem Lagermodus in den Aktivmodus umschaltbar und damit der Drehgeber von dem Lagermodus in den Aktivmodus umschaltbar, so dass die Energieschnittstelle zusätzlich als Schalterschnittstelle und die elektrische Versorgungsspannung zusätzlich als Steuersignal fungiert.

Zweckmäßig ist das Schließen des elektrischen Schalters ausschließlich mittels des Steuersignales ausführbar als nur einer notwendigen Bedingung.

Das Schließen des elektrischen Schalters kann somit auch optional ohne das Abschalten der Versorgungsspannung an der Energieschnittstelle ausgeführt werden.

In einer ergänzenden Variante befindet sich während des geschlossenen elektrischen Schalters die Recheneinheit stets in dem Aktivmodus und/oder während des geöffneten Schalters befindet sich die Recheneinheit stets in dem Lagermodus.

In einer weiteren Ausführungsform ist die Änderung des Modus als Arbeitsweise des Drehgebers von dem Aktivmodus in den Lagermodus nur während und/oder nach der Beaufschlagung der Schalterschnittstelle mit dem Steuersignal zur Aktivierung des Lagermodus ausführbar.

Voraussetzung für die Änderung des Modus als Arbeitsweise des Drehgebers von dem Aktivmodus in den Lagermodus ist somit stets das Steuersignal zur Aktivierung des Lagermodus, vorzugsweise als erste notwendige Bedingung für eine Aktivierung einer zweiten notwendigen Bedingung. Abweichend hiervon ist es auch möglich, dass mit dem Steuersignal zur Aktivierung des Lagermodus ohne eine weitere zweite Bedingung das Umschalten von dem Aktivmodus in den Lagermodus ausführbar ist.

In einer zusätzlichen Ausführungsform sind die Codierungen als optische Codierungen ausgebildet zur Veränderung und/oder Modulation von Licht und die Erfassungseinheit ist eine Lichtsende- und Lichtempfangseinheit zum Aussenden von Licht und zum Empfangen des veränderten und/oder modulierten Lichtes.

In einer ergänzenden Variante sind die Codierungen als magnetische Codierungen von Magneten gebildet und die Erfassungseinheit ist ein Hallsensor.

Im Nachfolgenden wird ein Ausführungsbeispiel der Erfindung unter Bezugnahme auf die beigefügten Zeichnungen näher beschrieben. Es zeigt:

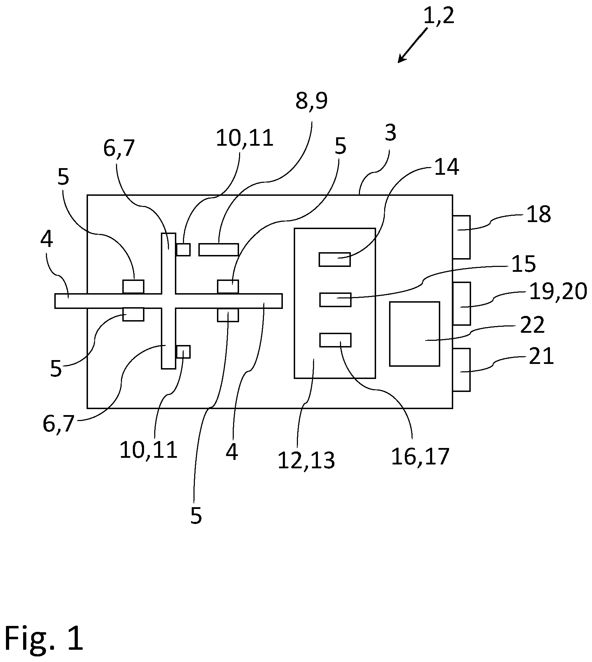

- Fig. 1: einen stark vereinfachten Längsschnitt eines Drehgebers.

In Fig. 1 ist ein Drehgeber 1 als ein Absolutdrehgeber 2 dargestellt. Der Drehgeber 1 dient dazu, eine Drehposition an einem technischen System, beispielsweise eine Antriebswelle einer Maschine, zu erfassen.

Der Drehgeber 1 umfasst ein Gehäuse 3 aus Metall oder Kunststoff. Innerhalb und außerhalb des Gehäuses 3 sind zahlreiche Komponenten 4 bis 22 des Drehgebers 1 angeordnet. Die elektrischen Leitungen zur elektrischen Verbindung der Komponenten 4 bis 22 miteinander sind nicht in Fig. 1 dargestellt.

Eine Eingangswelle 4 des Drehgebers 1 ist mit einer Lagerung 5 um eine nicht dargestellte Rotationsachse drehbar gelagert. Die Eingangswelle 4 ist überwiegend innerhalb des Gehäuses 3 angeordnet und ein kleiner Teil der Eingangswelle 4 ist durch eine Öffnung in dem Gehäuse 3 nach außerhalb des Gehäuses 3 geführt. Die Eingangswelle 4 ist mit einer Antriebswelle einer Maschine verbunden. An der Eingangswelle 4 ist eine Rotationseinheit 6 als eine Rotationsscheibe 7 drehfest fixiert. Die Rotationseinheit 6 ist wiederum somit mittelbar mit der Antriebswelle der Maschine verbunden.

Die Rotationsscheibe 7 ist mit Codierungen 10 als optische Codierungen 11 versehen. Eine Erfassungseinheit 8 dient zur Erfassung der Position der Codierungen 10. Die Erfassungseinheit 8 ist als eine Lichtsende- und Lichtempfangseinheit 9 ausgebildet. Die Erfassungseinheit 8 sendet mit der Lichtsendeeinheit 9 Licht aus und das Licht wird an den optischen Codierungen 11 verändert, insbesondere moduliert und reflektiert, und dieses veränderte Licht wird von der Lichtempfangseinheit 9 erfasst. Dadurch können von der Erfassungseinheit 8 die Positionen der Codierungen 10 und damit mittels einer Recheneinheit 12 als einem Mikrocontroller 13 auch die Drehpositionen der Eingangswelle 4 und somit der Antriebswelle der Maschine (nicht dargestellt) erfasst werden.

Der Mikrocontroller 13 umfasst einen Prozessor 14, einen Speicher 15 zur Speicherung von Daten und einen Schalter 16 als einen Halbleiterschalter 17.

Außenseitig an dem Gehäuse 3 des Drehgebers 1 sind eine Energieschnittstelle 18, eine Datenschnittstelle 19 und eine Schalterschnittstelle 21 ausgebildet.

Die Energieschnittstelle 18 ist zur Versorgung des Drehgebers 1 mit einer Versorgungsspannung aus einer externen Spannungsquelle von zwei, nicht dargestellten elektrischen Kontaktelementen gebildet. Der Drehgeber 1 ist im Allgemeinen in ein Maschinensystem und dessen Spannungsquelle integriert und eingebaut, sodass die Spannungsquelle des Maschinensystems auch zur Versorgung des Drehgebers 1 mit elektrischer Energie dient.

Die Eingangswelle 4 ist drehfest mit der Antriebswelle des Maschinensystems verbunden, sodass damit die Drehposition und der Drehwinkel der Antriebswelle des Maschinensystems (nicht dargestellt) von dem Drehgeber 1 erfasst werden kann.

Die Datenschnittstelle 19 ist beispielsweise als eine serielle Schnittstelle oder eine Bus-Schnittstelle oder eine Funkschnittstelle ausgebildet und dient zur Übertragung der Daten der erfassten Drehposition bzw. des Drehwinkels der Eingangswelle und damit auch der Antriebswelle des Maschinensystems an die Umgebung. Die Schalterschnittstelle 21 ist beispielsweise als eine serielle Schnittstelle oder eine Bus-Schnittstelle oder eine Funkschnittstelle ausgebildet und dient zur Übertragung eines Steuersignales zum Umschalten des Drehgebers 1 von einem Aktivmodus in einen Lagermodus und umgekehrt.

Aufgrund der Integration des Drehgebers 1 in das nicht dargestellte Maschinensystem ist bei einem abgeschalteten Maschinensystem auch keine externen Spannungsquelle mehr vorhanden, sodass dadurch an der Energieschnittstelle 18 des Drehgebers 1 keine Versorgungsspannung mehr zur Energieversorgung des Drehgebers 1 mit elektrischer Energie vorhanden ist.

Trotzdem ist es notwendig, auch bei einem abgeschalteten Maschinensystem ohne externer Spannungsquelle für den Drehgeber 1 die Position der Eingangswelle 4 erfassen zu können. Beispielsweise tritt nach dem Abschalten des Maschinensystems noch für eine kurze Zeit eine Rotationsbewegung der Antriebswelle und damit auch der Eingangswelle 4 auf, sodass es für einen anschließenden Neustart des Maschinensystems notwendig ist, auch bei der abgeschalteten externen Spannungsquelle stets die Position der Antriebswelle und damit auch der Eingangswelle 4 mit dem Drehgeber 1 erfassen zu können.

Nach der Herstellung des Drehgebers 1 befindet sich der Drehgeber 1 in einem Aktivmodus zur Erfassung des Drehwinkels der Eingangswelle 4. In dem Aktivmodus des Drehgebers 1 ist die Erfassungseinheit 8 bestromt. Die Recheneinheit 12 hat in dem Aktivmodus einen Stromverbrauch von ungefähr 10 µA. Während der Beaufschlagung der Energieschnittstelle 18 nach der Herstellung des Drehgebers 1 mit der Versorgungsspannung wird auf die Schalterschnittstelle 21 ein Steuersignal zur Aktivierung des Lagermodus des Drehgebers 1 aufgebracht. Das Aufbringen dieses Steuersignales als erste notwendige Bedingung zur Aktivierung des Lagermodus des Drehgebers 1 wird in dem Speicher 15 des Mikrocontrollers 13 gespeichert. Zusätzlich wird von dem Mikrocontroller 13 mit einem nicht dargestellten Spannungssensor ständig die Spannung an der Energieschnittstelle 18 erfasst. Der Mikrocontroller 13 ist dahingehend ausgelegt und/oder programmiert, dass nach dem Aufbringen des Steuersignals (erste notwendige Bedingung) und dem Abschalten der Versorgungsspannung an der Energieschnittstelle 18 ein Umschalten des Drehgebers 1 von dem Aktivmodus in den Lagermodus ausgeführt wird.

Das Abschalten der Versorgungsspannung an der Energieschnittstelle 18 fungiert damit zusätzlich als zweite notwendige Bedingung und als ein weiteres Steuersignal für das Umschalten des Drehgebers von dem Aktivmodus in den Lagermodus. Die Energieschnittstelle 18 fungiert damit implizit als zusätzliche Schalterschnittstelle 21.

Dieses Umschalten wird ausgeführt, indem der Halbleiterschalter 17 als der Schalter 16 in dem Mikrocontroller 13 geöffnet wird, sodass dadurch die Strom- und Spannungsversorgung der Erfassungseinheit 8 unterbrochen wird und zusätzlich der Mikrocontroller 13 von einem Aktivmodus in einen Stand-by-Modus umgeschaltet wird. In dem Stand-by-Modus benötigt der Mikrocontroller 13 wesentlich weniger elektrische Energie als in dem Aktivmodus.

Zusätzlich ist in dem Lagermodus die Erfassungseinheit 8 abgeschaltet und benötigt damit auch keine Energie im Vergleich zu dem Aktivmodus des Drehgebers 1. Damit benötigt der Drehgeber 1 insgesamt während des Lagermodus wesentlich weniger elektrische Energie als während des Aktivmodus.

Nach der Herstellung des Drehgebers 1 kann der Drehgeber 1 über einen längeren Zeitraum von mehreren Jahren in dem Lagermodus gelagert werden ohne dass eine wesentliche Entladung der Batterie 22 ausgeführt wird. Zum Umschalten des Drehgebers 1 von dem Lagermodus in den Aktivmodus ist es lediglich notwendig, auf die Energieschnittstelle 18 die Versorgungsspannung aufzubringen. Diese Versorgungsspannung wird von dem nicht dargestellten Spannungssensor in der Recheneinheit 12 als dem Mikrocontroller 13 erfasst und anschließend der Mikrocontroller 13 von dem Stand-by-Modus in den Aktivmodus umgeschaltet und zusätzlich der Schalter 16 geschlossen, sodass dadurch auch die Erfassungseinheit 8 wieder mit elektrischer Energie versorgt ist, entweder aus der Batterie 22 oder von der Energieschnittstelle 18.

In diesem Aktivmodus des Drehgebers 1 kann wieder die Position der Eingangswelle 4 erfasst werden. Bei dem Einbau des Drehgebers 1 in ein Maschinensystem wird ohnehin bei der Inbetriebnahme des Maschinensystems der Drehgeber 1 an der Energieschnittstelle 8 mit der Versorgungsspannung aus dem Netz beaufschlagt, sodass damit automatisch mit der erstmaligen Inbetriebnahme des Maschinensystems mit dem Drehgeber 1 dieser selbsttätig von dem Lagermodus in einen Aktivmodus umgeschaltet wird. Sofern beispielsweise der Drehgeber 1 nach einem Einsatz in dem Maschinensystem wieder für einen längeren Zeitraum gelagert werden soll, kann dieser auf einfache Weise mittels des Steuersignales an der Schalterschnittstelle 21, wie vorstehend beschrieben, in den Lagermodus umgeschaltet werden. Dadurch kann der Drehgeber 1 wieder für einen längeren Zeitraum ohne wesentliche Entladung der Batterie 22 gelagert werden.

Insgesamt betrachtet sind mit dem erfindungsgemäßen Drehgeber 1 und dem erfindungsgemäßen Verfahren zur Herstellung des Drehgebers 1 wesentliche Vorteile verbunden. Der Drehgeber 1 kann einfach zwischen dem Aktivmodus und dem Lagermodus umgeschaltet werden. Während des Lagermodus ist der Bedarf an elektrischer Energie für den Drehgeber 1 wesentlich reduziert, sodass während einer längerfristigen Lagerung des Drehgebers 1 im Wesentlichen keine Entladung der Batterie 22 auftritt. Somit wird die Batterie 22 im Lagermodus geschont. Damit kann in vorteilhafter Weise der Drehgeber 1 über einen längeren Zeitraum gelagert werden und kann anschließend in einem Maschinensystem mit der im Wesentlichen vollständig aufgeladenen Batterie 22 über einen längeren Zeitraum betrieben werden.

## Patentansprüche

1. Drehgeber (1) zur Erfassung einer Position einer Eingangswelle (4), umfassend
- die Eingangswelle (4),
- eine mit der Eingangswelle (4) drehfest verbundene Rotationseinheit (6) mit Codierungen (10),
- eine Erfassungseinheit (8, 9) mit welcher die Positionen der Codierungen (10) auf der Rotationseinheit (6) erfassbar und als Codierungssignale ausgebbar sind,
- eine Recheneinheit (12, 13) mit der aus den Codierungssignalen die Position der Eingangswelle (4) bestimmbar ist,
- eine Energieschnittstelle (18) zur Versorgung des Drehgebers (1) mit einer externen Spannungsquelle,
- eine Datenschnittstelle (19) zur Übertragung der erfassten Position der Eingangswelle (4) an die Umgebung des Drehgebers (1),
- eine Batterie (22), wobei mittels der Batterie (22) der Drehgeber ohne elektrische Energie aus der externen Spannungsquelle in einem Aktivmodus betreibbar ist, wobei
- der Drehgeber (1) einen elektrischen Schalter (16, 17) umfasst, **gekennzeichnet dadurch, dass**
- in einem Lagermodus des Drehgebers (1) der elektrische Schalter (16, 17) geöffnet ist,
- die elektrische Versorgung der Erfassungseinheit (8, 9) mit elektrischer Energie aus der Batterie (22) unterbrochen ist, so dass während des Lagermodus die elektrische Leistung für den Lagermodus des Drehgebers (1) kleiner als das Entladen der Batterie (22) während des Aktivmodus des Drehgebers (1) ist und der Drehgeber (1) dahingehend ausgebildet ist, dass während des Lagermodus mit dem geöffneten elektrischen Schalter (16, 17) mittels eines Anlegens einer elektrischen Versorgungsspannung an die Energieschnittstelle (18) automatisch der elektrische Schalter (16, 17) schließbar ist und damit der Drehgeber (1) von dem Lagermodus in den Aktivmodus umschaltbar ist, so dass die Energieschnittstelle (18) zusätzlich als Schalterschnittstelle (21) und die elektrische Versorgungsspannung zusätzlich als Steuersignal fungiert.

2. Drehgeber nach Anspruch 1, **dadurch gekennzeichnet, dass** die Recheneinheit (12, 13) in dem Aktivmodus und in einem Stand-by-Modus betreibbar ist und die elektrische Leistung für den Betrieb der Recheneinheit (12, 13) in dem Stand-by-Modus kleiner als in dem Aktivmodus ist.

3. Drehgeber nach Anspruch 1 oder 2, **dadurch gekennzeichnet, dass** der Drehgeber (1) eine Schalterschnittstelle (21) zur Übertragung eines Steuersignales für den elektrischen Schalter (16, 17) umfasst.

4. Drehgeber nach einem der vorhergehenden Ansprüche, **dadurch gekennzeichnet, dass** die Recheneinheit (12, 13) des Drehgebers (1) in dem Lagermodus nahezu stromlos ist.

5. Drehgeber nach Anspruch 3, **dadurch gekennzeichnet, dass** die Datenschnittstelle (19) und/oder die Energieschnittstelle (18) zusätzlich als Schalterschnittstelle (21) für den elektrischen Schalter (16, 17) fungiert.

6. Drehgeber nach Anspruch 3, **dadurch gekennzeichnet, dass** das Öffnen und/oder Schließen des elektrischen Schalters (16, 17) mittels eines Steuersignales, das von der Schalterschnittstelle (21) an die Recheneinheit (12, 13) übertragbar ist, ausführbar ist.

7. Drehgeber nach Anspruch 1, **dadurch gekennzeichnet, dass** der Drehgeber (1) einen Spannungssensor umfasst und mit dem Spannungssensor die Spannung an der Energieschnittstelle (18) erfassbar ist und mittels der Daten aus dem Spannungssensor bei einer elektrischen Versorgungsspannung an der Energieschnittstelle (18) von der Recheneinheit (12, 13) automatisch der elektrische Schalter (16, 17) schließbar ist und der Drehgeber (1) von dem Lagermodus in den Aktivmodus wechselt.

8. Drehgeber nach Anspruch einem oder mehreren der Ansprüche 5 bis 7, **dadurch gekennzeichnet, dass** das Öffnen und/oder Schließen des elektrischen Schalters (16, 17) mittels des Steuersignales im Wesentlichen simultan während der Beaufschlagung der Schalterschnittstelle (21) mit dem Steuersignal zum Öffnen und/oder Schließen des elektrischen Schalters (16, 17) ausführbar ist und/oder nach der Beaufschlagung der Schalterschnittstelle (21) mit dem Steuersignal zum Öffnen und/oder Schließen des elektrischen Schalters (16, 17) ausführbar ist indem in der Recheneinheit (12, 13) die Beaufschlagung der Schalterschnittstelle (21) mit dem Steuersignal speicherbar ist.

9. Verfahren zur Herstellung eines Drehgebers (1) zur Erfassung einer Position einer Eingangswelle (4), mit den Schritten:
zur Verfügung stellen eines Drehgebers (1), umfassend
- eine mit der Eingangswelle (4) drehfest verbundene Rotationseinheit (6) mit Codierungen (10),
- eine Erfassungseinheit (8, 9) welche die Positionen der Codierungen (10) auf der Rotationseinheit (6) erfasst und als Codierungssignale ausgegeben werden,
- eine Recheneinheit (12, 13), welche aus den Codierungssignalen die Position der Eingangswelle (4) bestimmt,
- eine Energieschnittstelle (18) zur Versorgung des Drehgebers (1) mit einer externen Spannungsquelle,
- eine Datenschnittstelle (19) zur Übertragung der erfassten Position der Eingangswelle (4) an die Umgebung des Drehgebers (1),
- eine Batterie (22) mit welcher der Drehgeber (1) ohne elektrische Energie aus der externen Spannungsquelle in einem Aktivmodus des Drehgebers (1) betreibbar ist, so dass eine Erfassung der Position ohne elektrische Energie aus der externen Spannungsquelle und mit elektrischer Energie aus der externen Spannungsquelle ausführbar ist,
wobei der Drehgeber (1) mit einem elektrischen Schalter (16, 17) und einer Schalterschnittstelle (21) zur Verfügung gestellt wird, **gekennzeichnet dadurch,**
**dass** während der Beaufschlagung der Energieschnittstelle (18) des Drehgebers (1) mit einer Versorgungsspannung auf die Schalterschnittstelle (21) ein Steuersignal zum Öffnen des elektrischen Schalters (16, 17) und zur Aktivierung eines Lagermodus des Drehgebers (1) aufgebracht wird,
das Steuersignal in der Recheneinheit (12, 13) gespeichert wird und
aufgrund des Steuersignales als erster Bedingung und während oder nach dem Abschalten der Versorgungsspannung an der Energieschnittstelle (18) von der Recheneinheit (12, 13) als zweite Bedingung der elektrische Schalter (16, 17) geöffnet wird, so dass mittels des geöffneten elektrischen Schalters (16, 17) in dem Lagermodus des Drehgebers (1) die elektrische Versorgung der Erfassungseinheit (8, 9) mit elektrischer Energie aus der Batterie (22) unterbrochen wird und
so die Recheneinheit (12, 13) von einem Aktivmodus in einen Lagermodus umgeschaltet wird, so dass während des Lagermodus die elektrische Versorgung für den Lagermodus des Drehgebers (1) kleiner ist als das Entladen der Batterie während des Aktivmodus des Drehgebers (1).

## Claims

1. Rotary encoder (1) for detecting a position of an input shaft (4), comprising
- the input shaft (4),
- a rotation unit (6) with codings (10), which is torsionally stiff fixed to the input shaft (4) for conjoint rotation,
- a detection unit (8, 9) with which the positions of the codings (10) on the rotation unit (6) can be detected and output as coding signals,
- a computing unit (12, 13) with which the position of the input shaft (4) can be determined from the coding signals,
- an energy interface (18) for supplying the rotary encoder (1) with an external voltage source,
- a data interface (19) for transmitting the detected position of the input shaft (4) to the surroundings of the rotary encoder (1),
- a battery (22), wherein, by means of the battery (22), the rotary encoder can be operated in an active mode without electrical energy from the external voltage source,
wherein
- the rotary encoder (1) comprises an electrical switch (16, 17), **characterized in that**
- the electrical switch (16, 17) is open in a storage mode of the rotary encoder (1),
- the electrical supply of electrical energy from the battery (22) to the detection unit (8, 9) is interrupted, so that, during the storage mode, the electrical power for the storage mode of the rotary encoder (1) is less than the discharge of the battery (22) during the active mode of the rotary encoder (1), and
the rotary encoder (1) is designed such that, during the storage mode with the open electrical switch (16, 17), by applying an electrical supply voltage to the energy interface (18), the electrical switch (16, 17) is automatically closed and thus the rotary encoder (1) is switched from the storage mode to the active mode, so that the energy interface (18) additionally functions as a switch interface (21), and the electrical supply voltage additionally functions as a control signal.

2. Rotary encoder according to claim 1, **characterized in that** the computing unit (12, 13) is operable in the active mode and in a standby mode, and the electrical power for operating the computing unit (12, 13) in the standby mode is less than in the active mode.

3. Rotary encoder according to claim 1 or 2, **characterized in that** the rotary encoder (1) comprises a switch interface (21) for transmitting a control signal for the electrical switch (16, 17).

4. Rotary encoder according to any of the preceding claims, **characterized in that** the computing unit (12, 13) of the rotary encoder (1) is almost currentless in the storage mode.

5. Rotary encoder according to claim 3, **characterized in that** the data interface (19) and/or the energy interface (18) additionally functions as a switch interface (21) for the electrical switch (16, 17).

6. Rotary encoder according to claim 3, **characterized in that** the opening and/or closing of the electrical switch (16, 17) is executable by means of a control signal, which is transmittable from the switch interface (21) to the computing unit (12, 13).

7. Rotary encoder according to claim 1, **characterized in that** the rotary encoder (1) comprises a voltage sensor, and the voltage at the energy interface (18) is detectable with the voltage sensor, and, by means of the data from the voltage sensor, the electrical switch (16, 17) is automatically closed by the computing unit (12, 13) when an electrical supply voltage is applied to the energy interface (18), and the rotary encoder (1) changes from the storage mode to the active mode.

8. Rotary encoder according to one or more of claims 5 to 7, **characterized in that** the electrical switch (16, 17) can be opened and/or closed by means of the control signal substantially simultaneously during the application of the control signal to the switch interface (21) in order to open and/or close the electrical switch (16, 17), and/or after the application of the control signal to the switch interface (21) in order to open and/or close the electrical switch (16, 17), by the application of the control signal to the switch interface (21) being stored in the computing unit (12, 13).

9. Method for producing a rotary encoder (1) for detecting a position of an input shaft (4), comprising the steps of:
providing a rotary encoder (1), comprising
- a rotation unit (6) with codings (10), which is torsionally stiff connected to the input shaft (4) for conjoint rotation,
- a detection unit (8, 9) which detects the positions of the codings (10) on the rotation unit (6) and outputs them as coding signals,
- a computing unit (12, 13) which determines the position of the input shaft (4) from the coding signals,
- an energy interface (18) for supplying the rotary encoder (1) with an external voltage source,
- a data interface (19) for transmitting the detected position of the input shaft (4) to the surroundings of the rotary encoder (1),
- a battery (22) with which the rotary encoder (1) is operable in an active mode of the rotary encoder (1) without electrical energy from the external voltage source, so that a position is detectable without electrical energy from the external voltage source and with electrical energy from the external voltage source,
wherein the rotary encoder (1) is provided with an electrical switch (16, 17) and a switch interface (21),**characterized in that**, during the application of a supply voltage to the energy interface (18) of the rotary encoder (1), a control signal is applied to the switch interface (21) to open the electrical switch (16, 17) and to activate a storage mode of the rotary encoder (1),
the control signal is stored in the computing unit (12, 13), and
the electrical switch (16, 17) is opened on the basis of the control signal as a first condition, and during or after the switching off of the supply voltage to the energy interface (18) by the computing unit (12, 13) as a second condition, so that, by means of the open electrical switch (16, 17) in the storage mode of the rotary encoder (1), the electrical supply of electrical energy from the battery (22) to the detection unit (8, 9) is interrupted and therefore the computing unit (12, 13) is switched from an active mode to a storage mode, so that, during the storage mode, the electrical supply for the storage mode of the rotary encoder (1) is less than the discharge of the battery during the active mode of the rotary encoder (1).

## Revendications

1. Encodeur rotatif (1) pour la détection d'une position d'un arbre d'entrée (4), comprenant
- l'arbre d'entrée (4),
- une unité de rotation (6) solidaire en rotation à l'arbre d'entrée (4) et comportant des codages (10),
- une unité de détection (8, 9) avec laquelle les positions des codages (10) sur l'unité de rotation (6) peuvent être détectées et émises sous forme de signaux de codage,
- une unité de calcul (12, 13) avec laquelle la position de l'arbre d'entrée (4) peut être déterminée à partir des signaux de codage,
- une interface d'énergie (18) pour l'alimentation de l'encodeur rotatif (1) avec une source de tension externe,
- une interface de données (19) pour la transmission de la position détectée de l'arbre d'entrée (4) à l'environnement de l'encodeur rotatif (1),
- une batterie (22), dans lequel l'encodeur rotatif peut fonctionner dans un mode actif sans énergie électrique provenant de la source de tension externe au moyen de la batterie (22),
dans lequel
- l'encodeur rotatif (1) comprend un commutateur électrique (16, 17), **caractérisé en ce que**
- dans un mode entreposage de l'encodeur rotatif (1), le commutateur électrique (16, 17) est ouvert,
- l'alimentation électrique en énergie électrique de l'unité de détection (8, 9) à partir de la batterie (22) est interrompue de sorte que, pendant le mode entreposage, la puissance électrique pour le mode entreposage de l'encodeur rotatif (1) est inférieure à la décharge de la batterie (22) pendant le mode actif de l'encodeur rotatif (1), et
l'encodeur rotatif (1) est configuré de telle sorte que, pendant le mode entreposage avec le commutateur électrique (16, 17) ouvert, le commutateur électrique (16, 17) peut être fermé automatiquement au moyen d'une application d'une tension d'alimentation électrique à l'interface d'énergie (18) et que l'encodeur rotatif (1) peut ainsi être commuté du mode entreposage au mode actif, de sorte que l'interface d'énergie (18) agit en outre comme interface de commutation (21) et la tension d'alimentation électrique agit en outre comme signal de commande.

2. Encodeur rotatif selon la revendication 1, **caractérisé en ce que** l'unité de calcul (12, 13) peut fonctionner en mode actif et dans un mode veille et la puissance électrique pour le fonctionnement de l'unité de calcul (12, 13) en mode veille est inférieure à la puissance électrique en mode actif.

3. Encodeur rotatif selon la revendication 1 ou 2, **caractérisé en ce que** l'encodeur rotatif (1) comprend une interface de commutation (21) pour la transmission d'un signal de commande pour le commutateur électrique (16, 17).

4. Encodeur rotatif selon l'une des revendications précédentes, **caractérisé en ce que** l'unité de calcul (12, 13) de l'encodeur rotatif (1) est pratiquement sans courant en mode entreposage.

5. Encodeur rotatif selon la revendication 3, **caractérisé en ce que** l'interface de données (19) et/ou l'interface d'énergie (18) agit en outre comme interface de commutation (21) pour le commutateur électrique (16, 17).

6. Encodeur rotatif selon la revendication 3, **caractérisé en ce que** l'ouverture et/ou la fermeture du commutateur électrique (16, 17) est exécutable au moyen d'un signal de commande qui peut être transmis de l'interface de commutation (21) à l'unité de calcul (12, 13).

7. Encodeur rotatif selon la revendication 1, **caractérisé en ce que** l'encodeur rotatif (1) comprend un capteur de tension et la tension au niveau de l'interface d'énergie (18) peut être détectée avec le capteur de tension et, au moyen des données provenant du capteur de tension, en cas de tension d'alimentation électrique au niveau de l'interface d'énergie (18), l'unité de calcul (12, 13) peut fermer automatiquement le commutateur électrique (16, 17) et l'encodeur rotatif (1) passe du mode entreposage au mode actif.

8. Encodeur rotatif selon l'une ou plusieurs des revendications 5 à 7,
**caractérisé en ce que** l'ouverture et/ou la fermeture du commutateur électrique (16, 17) peuvent être exécutées au moyen du signal de commande sensiblement simultanément pendant la sollicitation de l'interface de commutation (21) avec le signal de commande pour l'ouverture et/ou la fermeture du commutateur électrique (16, 17) et/ou peuvent être exécutées après la sollicitation de l'interface de commutation (21) avec le signal de commande pour l'ouverture et/ou la fermeture du commutateur électrique (16, 17) **en ce que** la sollicitation de l'interface de commutation (21) avec le signal de commande peut être mémorisée dans l'unité de calcul (12, 13).

9. Procédé de fabrication d'un encodeur rotatif (1) pour la détection d'une position d'un arbre d'entrée (4), comportant les étapes consistant à :
fournir un encodeur rotatif (1), comprenant
- une unité de rotation (6) solidaire en rotation à l'arbre d'entrée (4) et comportant des codages (10),
- une unité de détection (8, 9) qui détecte les positions des codages (10) sur l'unité de rotation (6) et qui les émet sous forme de signaux de codage,
- une unité de calcul (12, 13) qui détermine la position de l'arbre d'entrée (4) à partir des signaux de codage,
- une interface d'énergie (18) pour l'alimentation de l'encodeur rotatif (1) avec une source de tension externe,
- une interface de données (19) pour la transmission de la position détectée de l'arbre d'entrée (4) à l'environnement de l'encodeur rotatif (1),
- une batterie (22) avec laquelle l'encodeur rotatif (1) peut fonctionner dans un mode actif de l'encodeur rotatif (1) sans énergie électrique provenant de la source de tension externe, de sorte qu'une détection de la position peut être exécutée sans énergie électrique provenant de la source de tension externe et avec de l'énergie électrique provenant de la source de tension externe,
dans lequel l'encodeur rotatif (1) est mis à disposition avec un commutateur électrique (16, 17) et une interface de commutation (21),
**caractérisé en ce que**, pendant la sollicitation de l'interface d'énergie (18) de l'encodeur rotatif (1) avec une tension d'alimentation, un signal de commande est appliqué à l'interface de commutation (21) pour l'ouverture du commutateur électrique (16, 17) et pour l'activation d'un mode entreposage de l'encodeur rotatif (1),
le signal de commande est mémorisé dans l'unité de calcul (12, 13) et
sur la base du signal de commande comme première condition et pendant ou après la coupure de la tension d'alimentation au niveau de l'interface d'énergie (18) par l'unité de calcul (12, 13) comme seconde condition, le commutateur électrique (16, 17) est ouvert, de sorte qu'au moyen du commutateur électrique (16, 17) ouvert, en mode entreposage de l'encodeur rotatif (1), l'alimentation électrique de l'unité de détection (8, 9) est interrompue par l'énergie électrique provenant de la batterie (22) et l'unité de calcul (12, 13) est ainsi commutée d'un mode actif à un mode entreposage de sorte que, pendant le mode entreposage, l'alimentation électrique pour le mode entreposage de l'encodeur rotatif (1) est inférieure à la décharge de la batterie pendant le mode actif de l'encodeur rotatif (1).
